Europäisches Patentamt

European Patent Office

Office européen des brevets

(11) Veröffentlichungsnummer: **0 491 180 A2**

## EUROPÄISCHE PATENTANMELDUNG

(21) Anmeldenummer: **91119947.9**

(22) Anmeldetag: **22.11.91**

(51) Int. Cl.5: **H02J 7/14**

(30) Priorität: **18.12.90 DE 4040490**

(43) Veröffentlichungstag der Anmeldung:
**24.06.92 Patentblatt 92/26**

(84) Benannte Vertragsstaaten:
**AT CH DE ES FR GB IT LI SE**

(71) Anmelder: **KNORR-BREMSE AG**
**Moosacher Strasse 80 Postfach 401060**
**W-8000 München 40(DE)**

(72) Erfinder: **Mayer, Alfons**
**Allacher Strasse 239a**
**W-8000 München 50(DE)**

(54) **Ladeeinrichtung für den Akku einer Gleitschutzanlage eines Schienenfahrzeuges.**

(57) Die Ladeeinrichtung ist für den Akku 9 einer elektronischen Gleitschutzanlage (6) eines Schienenfahrzeuges, insbesondere eines sowohl in schnell- wie in langsamfahrende Güterzüge einstellbaren Güterwagens bestimmt. Um auch bei langsamer Fahrt eine ausreichende Aufladung des Akku (9) zu erreichen, ist einem aus einen Wechselstromgenerator (1) mit nachgeschaltetem Gleichrichter (2) gespeisten Ladekondensator (3) eine Wechselrichterschaltung (10) mit Hochtransformierung nachgeschaltet. Zum Vermeiden einer Überladung des Akkus 9 ist eine von dessen Spannung gesteuerte Überspannungsabschaltung (11) vorgesehen. Eine Tiefentladung des Akkus(9)wird durch eine Unterspannungsabschaltung (13) vermieden, welche zwischen dem Akku(9)und dem Versorgungseingang (5,16) der Gleitschutzanlage (6) eingeschaltet ist.

Fig. 1

Die Erfindung betrifft eine Ladeeinrichtung für den Akku einer elektronischen Gleitschutzanlage eines Schienenfahrzeuges, insbesondere Güterwagens, mit einem Wechselstromgenerator mit nachgeschaltetem Gleichrichter.

Für Schienenfahrzeuge, welche nahezu ausschließlich nur in langsamfahrende Züge eingestellt werden, also insbesondere für Güterwagen, ist es ausreichend, einen mechanischen Gleitschutz für die Radsätze vorzusehen. Zum Feststellen von mit hohen Drehverzögerungen verbundenen Gleitvorgängen nutzen diese mechanischen Gleitschutzeinrichtungen zumeist aus der Trägheit von Massen resultierende Kräfte aus. Diese mechanischen Gleitschutzeinrichtungen arbeiten autark, sie bedürfen keiner elektrischen Hilfsenergie zum Steuern der Bremsvorgänge, insbesondere des Bremszylinderdruckes, während Gleitvorgängen. Diese mechanischen Gleitschutzeinrichtungen sind daher insbesondere für keinerlei elektrische Ausrüstung aufweisende Güterwagen geeignet. Für schnellfahrende Schienenfahrzeuge sind diese mechanischen Gleitschutzeinrichtungen jedoch wegen ihres relativ langsamen und auch groben Regelverhaltens weniger geeignet. Für diese schnellfahrenden Schienenfahrzeuge, insbesondere Reisezugwagen, wurden daher rasch ansprechende und ein gutes Regelverhalten aufweisende elektronische Gleitschutzanlagen entwickelt.

Seit einiger Zeit sind nun Bestrebungen im Gange, auch den Güterverkehr auf dem Schienenweg zu beschleunigen, was erfordert, die Gütewagen für hohe Fahrgeschwindigkeiten geeignet zu gestalten. Hierbei ergibt sich das Problem, daß die bisher benutzen mechanischen Gleitschutzvorrichtungen den Ansprüchen nicht mehr genügen. Es wurden daher elektronische Gleitschutzanlagen entwickelt, welche mit einer eigenen Stromversorgung versehen sind und welche daher auch für Güterwagen ohne irgendwelche sonstige, elektrische Einrichtungen verwendbar sind; zur autaken Gestaltung der elektronischen Gleitschutzanlagen hinsichtlich ihrer Stromversorgung wurden die zu überwachenden Radsätze mit einem kleinen Generator ausgestattet. Es ist auch bekannt, einen der elektronischen Gleitschutzanlage zugehörenden Meßgenerator zugleich als Stromversorgungsgenerator zu benutzen. Alle diese Einrichtungen sind jedoch mit dem Mangel behaftet, daß die für hohe Fahrgeschwindigkeiten geeigneten Güterwagen häufig auch in Züge eingestellt werden, welche nur sehr langsam fahren. Bei diesen niedrigen Fahrgeschwindigkeiten wird jedoch der Stromversorgungsgenerator mit nur sehr geringen Drehgeschwindigkeiten angetrieben, so daß er die Stromversorgung der elektronischen Gleitschutzanlage bzw. das Laden eines dieser zugeordneten Pufferakkus nicht sicherstellen kann. Der Akku kann somit durch langdauernde Tiefentladung schwer geschädigt werden. Zum Vermeiden dieses Mangels ist bereits vorgeschlagen worden, zwischen dem zu überwachenden Radsatz und dem Stromversorgungsgenerator ein Übersetzungsgetriebe einzuordnen, doch ist ein derartiges Getriebe beim rauhen Güterwagenbetrieb störanfällig und stellt einen hohen Zusatzaufwand dar. Außerdem würde bei hoher Fahrgeschwindigkeit des Güterwagens der Ladegenerator mit einer ihn mechanisch gefährdenden Überdrehzahl angetrieben.

Es ist Aufgabe der Erfindung, eine Ladeeinrichtung der eingangs genannten Art derart auszugestalten, daß sie für Güterwagen geeignet ist, welche sowohl in schnellfahrende wie auch in langsamfahrende Güterzüge eingestellt werden; die Ladeeinrichtung soll innerhalb eines sehr weiten Fahrgeschwindigkeitsbereiches des Güterwagens ein ordnungsgemäßes Laden bzw. Geladenhalten des Akkus der elektronischen Gleitschutzanlage sicherstellen.

Diese Aufgabe wird für eine Ladeeinrichtung der eingangs genannten Art gemäß der Erfindung dadurch gelöst, daß zwischen dem Gleichrichter und dem Akku eine Wechselrichterschaltung mit Hochtransformierung sowie eine von der am Akku anliegenden Spannung gesteuerte Überspannungsabschaltung und zwischen dem Akku und einem Versorgungseingang der Gleitschutzanlage eine Unterspannungsabschaltung vorgesehen ist.

Nach der weiteren Erfindung vorteilhafte und zweckmäßige Ausbildungsmöglichkeiten für eine derartige Ladeeinrichtung sind den Merkmalen der Unteransprüche entnehmbar.

In den Zeichnungen

Fig.1 und 2  sind Schaltbilder für zwei unterschiedliche Ausführungsformen von nach der Erfindung ausgebildeten Ladeeinrichtungen dargestellt, die

Fig.3  zeigt eine abgewandelte Einzelheit.

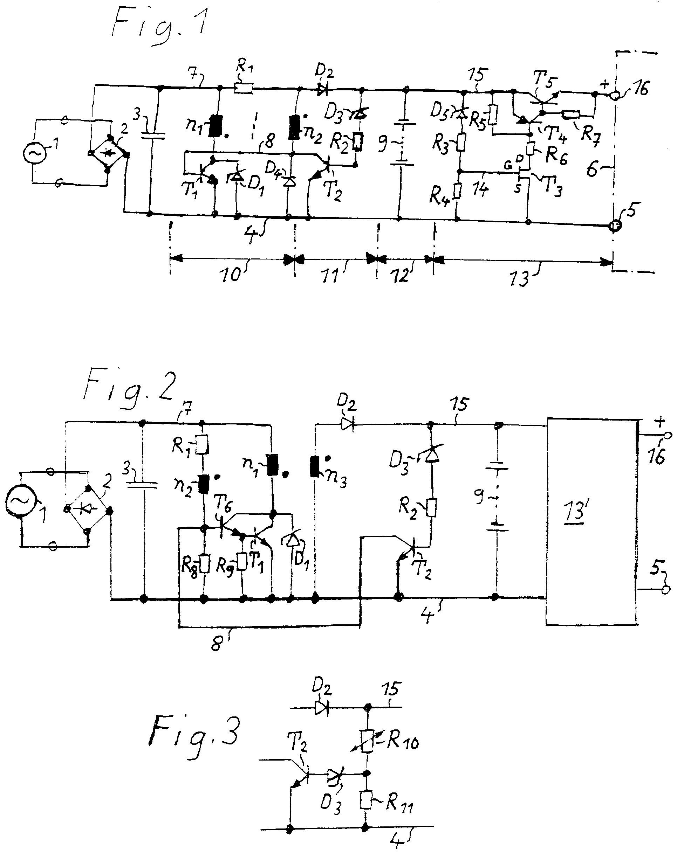

In den Zeichnungen Fig.1 bis Fig.3 sind einander entsprechende Teile mit gleichen Bezugszeichen bezeichnet.

Die Fig.1 zeigt einen Wechselstromgenerator 1, welcher über einen Gleichrichter 2 einen Ladekondensator 3 aufzuladen vermag. Minusseitig ist der Ladekondensator 3 an eine als Massepol bzw. Masseschiene dienende Leitung 4 angeschlossen, welche bis zum negativen Stromversorgungsanschluß 5 der nur strichpunktiert angedeuteten, elektronischen Gleitschutzanlage 6 durchgeführt ist. An den Ladekondensator 3 ist eine erste Serienschaltung mit einer Schwingspule $n_1$ und der Kollektor-Emitterstrecke eines ersten Transistors $T_1$ von der Plus-Leitung 7 zur Leitung 4 angeschlossen; die an der Leitung 4 liegende Kollektor-Emitterstrecke des

Transistors $T_1$ ist von einer ersten Zenerdiode $D_1$ überbrückt. An die erste Serienschaltung ist über einen ersten Widerstand $R_1$ eine zu dieser parallelgeschaltete, zweite Serienschaltung angekoppelt, welche eine Rückkopplungsspule $n_2$ und die Kollektor-Emitterstrecke eines zweiten Transistor $T_2$ umfaßt. Die Verbindungsstelle der Rückkoppelungsspule $n_2$ mit dem Kollektor des zweiten Transistors $T_2$ ist durch eine Leitung 8 mit der Basis des ersten Transistors $T_1$ verbunden. Die Verbindungsstelle zwischen dem ersten Widerstand $R_1$ und der Rückkoppelungsspule $n_2$ ist über eine erste Diode $D_2$ sowohl mit dem Akku 9 als auch über eine zweite Zenerdiode $D_3$ und einen zweiten Widerstand $R_2$ mit der Basis des zweiten Transistors $T_2$ verbunden. Eine zweite Diode $D_4$ überbrückt die Emitter-Kollektorstrecke des zweiten Transistors $T_2$.

In der Schaltung nach Fig.1 sind bestimmte Funktionsbereiche durch Pfeile gekennzeichnet, und zwar bezeichnet der Pfeil 10 den Wechselrichter, der Pfeil 11 die Überspannungsabschaltung und der Pfeil 12 den Akku. Der sich an den Pfeil 12 anschließende, vom Pfeil 13 bezeichnete Bereich wirkt als Unterspannungsabschaltung. Die Gleitschutzanlage 6 stellt einen Verbraucher dar.

Die Unterspannungsabschaltung weist eine parallel zum Akku 9 geschaltete dritte Serienschaltung, bestehnd aus einer weiteren Zenerdiode $D_5$ und zwei Widerständen $R_3$ und $R_4$ als Spannungsteiler, auf. Parallel zur dritten Serienschaltung ist eine vierte Serienschaltung vorgesehen, welche aus zwei Widerständen $R_5$ und $R_6$ und der Drain-Source-Strecke D-S eines Feldeffekttransistors $T_3$ besteht. Der Abgriff zwischen den beiden Widerständen $R_3$ und $R_4$ der dritten Serienschaltung ist durch eine Leitung 14 mit dem Gate G des Feldeffekttransistors $T_3$ verbunden. Weiterhin sind zwei Transistoren $T_4$ und $T_5$ vorgesehen, wobei die Kollektor-Emitterstrecke des einen Transistors $T_5$ in der Verbindungsleitung 15 vom Akku 9 zum Stromversorgungseingang 16 der Gleitschutzanlage 6 vorgeschaltet ist. Der Kollektor-Basisstrecke dieses Transistors $T_5$ ist die Emitter-Kollektorstrecke des anderen Transistors $T_4$ parallelgeschaltet und die Basis-Emitterstrecke des ersterwähnten Transistors $T_5$ ist von einem Widerstand $R_7$ überbrückt. Die Basis des zweiterwähnten Transistors $T_4$ steht mit dem Abgriff zwischen den beiden Widerständen $R_5$ und $R_6$ der vierten Serienschaltung in Verbindung.

Die Transistoren $T_1$, $T_2$ und $T_5$ sind npn-Transistoren, $T_4$ ist ein pnp-Transistor. Der Wechselrichter 10 der Ladeeinrichtung ist nach dem Sperrwandler-Prinzip aufgebaut, wobei die Rückkopplungsspule $n_2$ zugleich als Hochtransformierungsspule dient.

Zu Arbeits- bzw. Taktbeginn lädt der Wechselstromgenerator 1 über den Gleichrichter 2 den Ladekondensator 3 mit Gleichspannung auf. Durch die Schwingspule $n_1$ und dem Transistor $T_1$ fließt ein ansteigender Strom, während über den Widerstand $R_1$, die Rückkopplungsspule $n_2$ und durch die Leitung 8 sowie die Basis-Emitterstrecke des Transistors $t_1$ ein nahezu konstanter Strom fließt; der Transistor $T_2$ ist bei noch niedriger Ladespannung für den Akku 9 ebenso wie die Zenerdiode $D_3$ gesperrt. Über die Diode $D_2$ kann ein vernachlässigbar kleiner Ladestrom zum Akku 9 fließen. Sobald der Stromfluß durch die Schwingspule $n_1$ einen gewissen Wert erreicht hat, bricht der Stromfluß durch den Transistor $T_1$ und damit auch durch die Schwingspule $n_1$ rasch zusammen; das zusammenbrechende Feld der Schwingspule $n_1$ induziert in der Rückkopplungsspule $n_2$ einen relativ hohen Spannungsimpuls mit Stromfluß, welche durch die Diode $D_2$ den Akku 9 aufladen. Solange der Akku 9 nicht voll geladen ist, reicht die Spannung jedoch nicht zum Durchschalten der Zenerdiode $D_3$ aus, diese und der Transistor $T_2$ bleiben gesperrt. Anschließend wiederholen sich die vorstehend geschilderten Vorgänge, bis der Akku 9 voll geladen ist und eine dementsprechend hohe Spannung aufweist. Die Summe der Sperrspannung der Zenerdiode $D_3$ und der Emitter-Basisspannung des Transistors $D_2$ entspricht der vollen Ladespannung des Akku 9, bei Erreichen dieser Spannung werden daher die Zenerdiode $D_3$ und der Transistor $T_2$ leitend, wodurch die Basis des Transistors $T_1$ an Leitung 4 geschaltet wird und der Transistor $T_1$ somit sperrt. In diesem Sperrzustand ist der Stromfluß durch die Schwingspule $n_1$ unterbrochen und der Akku 9 wird mangels Strom- und Spannungsimpulse von der Rückkopplungsspule $n_2$ nicht weiter geladen. Die Diode $D_2$ schließt eine Entladung des Akkus durch die Schwing- oder Rückkopplungsspule $n_1$ oder $n_2$ aus und die Diode $D_4$ dient als Schutzdiode.

Es ergibt sich somit, daß auch während langsamer Fahrt des Güterwagens und entsprechend niedriger Aufladung des Ladekondensators 3 der Akku 9 durch Ladeimpulse sicher geladen wird, bis er seine volle Aufladung erreicht hat; sodann werden dem Akku 9 keine weiteren Ladeimpulse mehr zugeführt, so daß eine Überladung des Akkus 9 vermieden wird.

In normalen Betrieb erlaubenden Ladezuständen des Akkus 9 liefert dieser eine Spannung, welche die Zenerdiode $D_5$ und damit auch den Feldeffekttransistor $T_3$ leitend schaltet. Damit sind auch die Transistoren $T_4$ und $T_5$ leitend und der Akku 9 kann über den Stromversorgungseingang 16 die Gleitschutzanlage 6 mit Strom versorgen. Sobald der Ladezustand des Akku 9 unzulässig absinkt, reicht seine Spannung nicht mehr zum Durchschalten der Zenerdiode $D_5$ und des Feldeffekttransistors $T_3$ aus, beide und damit auch die

Transistoren $T_4$ und $T_5$ sperren und unterbrechen die Stromversorgung zum Stromversorgungseingang 16; damit wird eine unzulässige Tiefentladung des Akkus 9 vemieden.

Die Ladeeinrichtung nach Fig.2 entspricht in ihrem Aufbau und in ihrer Funktion weitgehend der Ladeeinrichtung nach Fig.1. Abweichend ist zusätzlich zur Schwingspule $n_1$ und Rückkopplungsspule $n_2$ eine gesonderte Hochtransformierungsspule $n_3$ zum Liefern der Ladeimpulse für den Akku 9 vorgesehen, wodurch die Plus-Leitung 7 und die Verbindungsleitung 15 galvanisch voneinander getrennt ausführbar sind. Weiterhin ist dem ersten Transistor $T_1$ ein Verstärkungstransistor $T_6$ vorgeschaltet und anstelle der zweiten Diode $D_4$ ist ein Widerstand $R_8$ vorgesehen. Die Leitung 8 führt zur Verbindungsstelle der Rückkopplungsspule $n_2$ mit der Basis des Verstärkungstransistors $T_6$ sowie dem zur Leitung 4 führenden Widerstand $R_8$, der Kollektor des Verstärkungstransistors $T_6$ ist mit der Verbindungsstelle der Schwingspule $n_1$ mit dem Kollektor des ersten Transistors $T_1$ und der Emitter des Verstärkungstransistors $T_6$ steht mit der Basis des ersten Transistors $T_1$ sowie über einen weiteren Widerstand $R_9$ mit der Leitung 4 in Verbindung. Die Unterspannungsabschaltung 13' ist in Fig.2 nur als Kästchen dargestellt.

Falls als Akku 9 ein NiCd-Akku verwendet wird, ist es zweckmäßig, eine Temperaturkompensation der oberen Ladespannung vorzusehen. Hierzu ist es zweckmäßig, die Überspannungsabschaltung gemäß Pfeil 11 in Fig.1 und die entsprechende Einrichtung nach Fig.2 derart umzugestalten, wie es Fig.3 zeigt:
Nach Fig.3 ist der zweiten Zenerdiode $D_3$ ein Spannungsteiler, bestehend aus einem NTC-Widerstand $R_{10}$ und einem weiteren Widerstand $R_{11}$, vorgeschaltet, welcher zwischen die Verbindungsleitung 15 sowie die Leitung 4 eingeordnet ist. Die zweite Zenerdiode $D_3$ ist an dem Mittenabgriff zwischen den beiden Widerständen $R_{10}$ und $R_{11}$ angeschlossen. Der NTC-Widerstand $R_{10}$ ist wärmeleitend mit dem Gehäuse des NiCd-Akkus zu verbinden, er ist beispielsweise an dieses Gehäuse anzukleben. Mit dieser Temperaturkompensation wird ein sicherer Überladungsschutz erreicht, was eine Voraussetzung für eine hohe Lebensdauer des Akkus ist.

Durch das günstige Ladeverhalten der vorstehend beschriebenen Ladeeinrichtungen ist es möglich, einen Akku 9 kleinerer Kapazität als bishr üblich zu verwenden, wodurch sich insbesondere ein Preisvorteil ergibt.

Kurzfassung:

Die Ladeeinrichtung ist für den Akku 9 einer elektronischen Gleitschutzanlage (6) eines Schienenfahrzeuges, insbesondere eines sowohl in schnell- wie in langsamfahrende Güterzüge einstellbaren Güterwagens bestimmt. Um auch bei langsamer Fahrt eine ausreichende Aufladung des Akku (9) zu erreichen, ist einem aus einen Wechselstromgenerator (1) mit nachgeschaltetem Gleichrichter (2) gespeisten Ladekondensator (3) eine Wechselrichterschaltung (10) mit Hochtransformierung nachgeschaltet. Zum Vermeiden einer Überladung des Akkus 9 ist eine von dessen Spannung gesteuerte Überspannungsabschaltung (11) vorgesehen. Eine Tiefentladung des Akkus(9)wird durch eine Unterspannungsabschaltung (13) vermieden, welche zwischen dem Akku(9)und dem Versorgungseingang (5,16) der Gleitschutzanlage (6) eingeschaltet ist.

**Bezugszeichenliste**

| | |
|---|---|
| 1 | Wechselstromgenerator |
| 2 | Gleichrichter |
| 3 | Ladekondensator |
| 4 | Leitung |
| 5 | Stromversorgungsanschluß |
| 6 | Gleitschutzanlage |
| 7 | Plus-Leitung |
| 8 | Leitung |
| 9 | Akku |
| 10 | Pfeil Wechselrichter |
| 11 | Pfeil Überspannungsabschaltung |
| 12 | Pfeil Akku |
| 13 | Pfeil Unterspannungsabschaltung |
| 13' | Unterspannungsabschaltung |
| 14 | Leitung |
| 15 | Verbindungsleitung |
| 16 | Stromversorgungseingang |
| $n_1$ | Schwingspule |
| $n_2$ | Rückkopplungsspule |
| $n_3$ | Hochtransformierungsspule |
| $D_1$ | 1. Zenerdiode |
| $D_2$ | 1. Diode |
| $D_3$ | 2. Zenerdiode |
| $D_4$ | 2. Diode |
| $D_5$ | Zenerdiode |
| $R_1$ | 1. Widerstand |
| $R_2$ | 2. Widerstand |
| $R_3$ | Widerstand |
| $R_4$ | Widerstand |
| $R_5$ | Widerstand |
| $R_6$ | Widerstand |
| $R_7$ | Widerstand |
| $R_8$ | Widerstand |
| $R_9$ | Widerstand |
| $R_{10}$ | NTC-Widerstand |
| $R_{11}$ | Widerstand |
| $T_1$ | 1. Transistor |
| $T_2$ | 2. Transistor |
| $T_3$ | Feldeffekttransistor |

$T_4$　　　Transistor
$T_5$　　　Transistor
$T_6$　　　Verstärkungstransistor

**Patentansprüche**

1. Ladeeinrichtung für den Akku (9) einer elektronischen Gleitschutzanlage (6) eines Schienenfahrzeuges, insbesondere Güterwagens, mit einem Wechselstromgenerator (1) mit nachgeschaltetem Gleichrichter (2), dadurch gekennzeichnet, daß zwischen dem Gleichrichter (2) und dem Akku (9) eine Wechselrichterschaltung (10) mit Hochtransformierung sowie eine von der am Akku (9) anliegenden Spannung gesteuerte Überspannungsabschaltung (11) und zwischen dem Akku (9) und einem Versorgungseingang (5,16) der Gleitschutzanlage (6) eine Unterspannungsabschaltung (13;13') vorgesehen ist.

2. Ladeeinrichtung nach Anspruch 1, dadurch gekennzeichnet, daß die Wechselrichterschaltung (10) mit Hochtransformierung nach dem Sperrwandler-Prinzip mit einer Hochtransformierungsspule ($n_2$;$n_3$) ausgebildet ist.

3. Ladeeinrichtung nach Anspruch 2, dadurch gekennzeichnet, daß eine Rückkoppelungsspule ($n_2$) der Wechselrichterschaltung (11) zugleich die Hochtransformierungsspule ist (Fig.1).

4. Ladeeinrichtung nach Anspruch 3, dadurch gekennzeichnet, daß im Anschluß an einen Ladekondensator (3) die Wechselrichterschaltung (11) in erster Serienschaltung eine Schwingspule ($n_1$) und eine Kollektor-Emitterstrecke eines ersten Transistors ($T_1$) mit zur Kollektor-Emitterstrecke parallelgeschalteter, erster Zenerdiode ($D_1$) aufweist, wobei die erste Serienschaltung parallel zum Ladekondensator (3) geschaltet ist, daß an die erste Serienschaltung über einen ersten Widerstand ($R_1$) und zu dieser parallel eine zweite Serienschaltung angekoppelt ist, welche die Rückkoppelungsspule ($n_2$) und die Kollektor-Emitterstrecke eines zweiten Transistors ($T_2$) umfaßt, wobei die Basis des ersten Transistors ($T_1$) mit der Verbindungsstelle von Rückkoppelungsspule ($n_2$) und Kollektor des zweiten Transistors ($T_2$) verbunden ist und wobei der rückkoppelungspulenseitige Endpunkt der zweiten Serienschaltung über eine erste Diode ($D_2$) sowohl mit dem Akku (9) als auch über eine zweite Zenerdiode ($D_3$) und einen zweiten Widerstand ($R_2$) mit der Basis des zweiten Transistors ($T_2$) verbunden ist (Fig..1).

5. Ladeeinrichtung nach Anspruch 4, dadurch gekennzeichnet, daß der Kollektor-Emitterstrecke des zweiten Transistors ($T_2$) eine in Sperrichtung geschaltete, zweite Diode ($D_4$) parallelgeschaltet ist.

6. Ladeeinrichtung nach Anspruch 4 oder 5, dadurch gekennzeichnet, daß dem ersten Transistor ($T_1$) ein Verstärkertransistor zugeordnet ist.

7. Ladeeinrichtung nach Anspruch 2, dadurch gekennzeichnet, daß im Anschluß an einen Ladekondensator (3) die Wechselrichterschaltung in erster Serienschaltung eine Schwingspule ($n_1$) und eine Kollektor-Emitterstrecke eines ersten Transistors ($T_1$) mit zur Kollektor-Emitterstrecke parallelgeschalteter, erster Zenerdiode ($D_1$) aufweist, wobei die erste Serienschaltung parallel zum Ladekondensator (3) geschaltet ist, daß die Hochtransformierungsspule ($n_3$) über eine Diode ($D_2$) zum einen an den Akku (9) und zum anderen über eine zweite Zenerdiode ($D_3$) und einen Widerstand ($R_2$) an die Basis eines mit seinem Emitter an Masse (Leitung 4) angeschlossenen, zweiten Transistors ($T_2$) angeschlossen ist, daß parallel zum Ladekondensator (3) eine zweite Serienschaltung, umfassend einen Widerstand ($R_1$), eine Rückkoppelungsspule ($n_2$) und einen weiteren Widerstand ($R_8$) geschaltet ist, daß die Verbindungsstelle der Rückkoppelungsspule ($n_2$) mit dem weiteren Widerstand ($R_8$) mit dem Kollektor des zweiten Transistors ($T_2$) und der Basis eines dritten Transistors ($T_6$) in Verbindung steht, und daß der Kollektor bzw. der Emitter des dritten Transistors ($T_6$) mit dem Kollektor bzw. der Basis des ersten Transistors ($T_1$) verbunden ist (Fig.2).

8. Ladeeinrichtung nach Anspruch 7, dadurch gekennzeichnet, daß die Basis des ersten Transistors ($T_1$) über einen Widerstand ($R_9$) an Masse (Leitung 4) geschaltet ist.

9. Ladeeinrichtung nach einem oder mehreren der vorstehenden Ansprüche, dadurch gekennzeichnet, daß die Unterspannungsabschaltung (13) parallel zum Akku (9) eine dritte Serienschaltung, umfassend eine Zenerdiode ($D_5$) und zwei Widerstände ($R_3$,$R_4$) und eine vierte Serienschaltung, umfassend zwei Widerstände ($R_5$,$R_6$) und einen Feldeffekttransistor ($T_3$) aufweist, daß der Abgriff zwischen den beiden Widerständen ($R_3$,$R_4$) der dritten Serienschaltung mit dem Gate (G) des Feldeffekttransistors ($T_3$) verbunden ist, und daß zwei Transistoren ($T_5$,$T_4$) vorgesehen sind, wobei die Kollektor-Emitterstrecke des einen Transistors (T5) dem Versorgungseingang (16) der Gleitschutzanlage (6) vorgeschaltet, der Kollektor-Basisstrecke des einen Transistors (T5) die Emitter-Kollektorstrecke des anderen Transistors (T4) sowie der Basis-Emitterstrecke des einen Transistors (T5) ein Widerstand (R7) parallelgeschaltet und die Basis des anderen Transistors (T4) mit einem Abgriff zwischen den beiden Widerständen (R5,R6) der vierten Serienschaltung verbunden ist.

10. Ladeeinrichtung nach Anspruch 4 oder 7, für eine Gleitschutzanlage (6) mit einem NiCd-Akku (9), dadurch gekennzeichnet, daß anstelle der zweiten Zenerdiode (D3) mit nachgeschaltetem Widerstand (R2) ein aus einem mit gutem Wärmeübergang am Akku (9) angeordneten NTC-Widerstand (R10) und einem Widerstand (R11) gebildeter Spannungsteiler vorgesehen ist, dessen Mittelabgriff über die zweite Zenerdiode D3) an die Basis des zweiten Transistors (T2) angeschlossen ist (Fig.3).

Fig. 1

Fig. 2

Fig. 3